# EUROPEAN PATENT APPLICATION

(11) **EP 2 073 541 A2**
(43) Date of publication of application: **24.06.2009**
(21) Application number: 08021679.9
(22) Date of filing: 12.12.2008
(51) Int. Cl.: H04N 7/10, H04L 12/28, H04H 40/27

(54) **Systems and methods for providing a moca compatability strategy**

(30) Priority: 19.12.2007 US 959662
(71) Applicant: Broadcom Corporation, Irvine, California 92617-3038 (US)
(72) Inventor: McMullin, Donald G., 92653 Laguna Hills (US); Gomez, Ramon A., 92675 San Juan Cap (US)
(74) Representative: Jehle, Volker Armin

(57) **Abstract**

Systems and methods for performing a method for reducing interference from Multimedia over Coax Alliance (MoCA) signals in a cable television double conversion tuner are provided. The method may include receiving an indication of the channel in which MoCA signals are operating. When the channel in which the MoCA signals are operating is in the same frequency band as an intermediate frequency of the tuner, the method may require shifting an intermediate frequency of the tuner out of the frequency band occupied by the channel in which the MoCA signals are operating.

## Description

### FIELD OF TECHNOLOGY

The present invention relates generally to information networks and specifically to transmitting information such as media information over communication lines such as coaxial cable (hereinafter "coax"), thereby to form a communications network.

### BACKGROUND OF THE INVENTION

Home network technologies using coax are known generally. The Multimedia over Coax Alliance (MoCA™), at its website mocalliance.org, provides an example of a suitable specification (MoCA 1.0) for networking of digital video and entertainment through existing coaxial cable in the home which has been distributed to an open membership. MoCA 1.0 specification is incorporated by reference herein in its entirety.

Home networking over coax taps into the vast amounts of unused bandwidth available on the in-home coax. More than 70% of homes in the United States have coax already installed into the home infrastructure. Many have existing coax in one or more primary entertainment consumption locations such as family rooms, media rooms and master bedrooms - ideal for deploying networks. Home networking technology allows homeowners to utilize this infrastructure as a networking system and to deliver other entertainment and information programming with high QoS (Quality of Service).

The technology underlying home networking over coax provides high speed (270 mbps), high QoS, and the innate security of a shielded, wired connection combined with state of the art packet-level encryption. Coax is designed for carrying high bandwidth video. Today, it is regularly used to securely deliver millions of dollars of pay per view and premium video content on a daily basis. Home networking over coax can also be used as a backbone for multiple wireless access points used to extend the reach of wireless network throughout a consumer's entire home.

Home networking over coax provides a consistent, high throughput, high quality connection through the existing coaxial cables to the places where the video devices currently reside in the home. Home networking over coax provides a primary link for digital entertainment, and may also act in concert with other wired and wireless networks to extend the entertainment experience throughout the home.

Currently, home networking over coax works with access technologies such as ADSL and VDSL services or Fiber to the Home (FTTH), that typically enter the home on a twisted pair or on an optical fiber, operating in a frequency band from a few hundred kilohertz to 8.5MHz for ADSL and 12MHZ for VDSL. As services reach the home via xDSL or FTTH, they may be routed via home networking over coax technology and the in-home coax to the video devices. Cable functionalities, such as video, voice and Internet access, may be provided to homes, via coaxial cable, by cable operators, and use coaxial cables running within the homes to reach individual cable service consuming devices locating in various rooms within the home. Typically, home networking over coax type functionalities run in parallel with the cable functionalities, on different frequencies.

The coax infrastructure inside the house typically includes coaxial wires and splitters. Splitters used in homes typically have one input and two or more outputs and are designed to transfer signals from input to outputs in the forward direction, or from outputs to input in the backward direction and to isolate splitter outputs and prevent signals from flowing room/outlet to room/outlet. Isolation is useful in order to a) reduce interference from other devices and b) maximize power transfer from Point Of Entry (POE) to outlets for best TV reception.

MoCA signals can be very strong compared to the CATV (Cable TV) or satellite DBS (Dish Broadcasting System) signals presently carried on the coaxial routing. Power levels of MoCA signals above 0 dBm are possible, compared to typical CATV signals of -50 dBm. MoCA signals are typically very strong in order to allow for large potential losses from one network node to another within the home.

In a typical MoCA implementation, a CATV receiver may have a pre-filter to remove the unwanted MoCA energy. Likewise, the MoCA transceiver may have a pre-filter to remove CATV energy. These pre-filters may need to be complex, high-order filters to provide sufficient attenuation with a narrow transition band. To maximize utilization of the coaxial cable spectrum, the MoCA and CATV signals may only be separated by a relatively small frequency interval.

If a double conversion tuner is used to receive CATV signals coexisting with a MoCA network, one possible interference effect is leakage of the strong MoCA signal past the prefilter and past the first mixer stage of the CATV tuner, directly into the CATV tuner first intermediate frequency (IF) stage. If this leakage is not suppressed adequately, the SNR (Signal to Noise Ratio) of the CATV IF signal will be degraded. If there is enough degradation, proper reception of the CATV signal may become impossible.

A similar problem could occur in any suitable RF (Radio Frequency) system subjected to interference at the system's IF frequency.

It would be desirable to reduce the effect of the degradation of CATV tuner performance by strong out-of-band interfering signals, such as those from a MoCA home network.

### SUMMARY OF THE INVENTION

A system and/or method for reducing degradation of CATV tuner performance by out-of-band interfering signals such as those from a MoCA home network, substantially as shown in and/or described in connection with at least one of the figures, as set forth more completely in the claims.

According to an aspect, there are provided one or more computer-readable media storing computer-executable instructions which, when executed by a processor on a computer system, perform a method for reducing interference from Multimedia over Coax Alliance (MoCA) signals in a cable television double conversion tuner, the method comprising:
receiving an indication of the channel in which MoCA signals are operating; and
shifting an intermediate frequency of the tuner out of the frequency band occupied by the channel in which the MoCA signals are operating.

Advantageously, the method further comprises receiving an indication that the channel in which the MoCA signals are operating is between about 1178 MHz and about 1222 MHz.

Advantageously, the method further comprises receiving an indication that the channel in which the MoCA signals are operating is between about 1228 MHz and about 1272 MHz.

Advantageously, the shifting a band of operation for an intermediate filter comprises adjusting the operation of an oscillator in the tuner in order to shift the band of operation of the intermediate filter.

Advantageously, the method further comprises using a common master processor to coordinate the operation of a MoCA transceiver and the intermediate filter of the tuner.

According to an aspect, there is provided a computer-readable medium storing computer-executable instructions for operating a cable television double conversion tuner, the instructions comprising:
a first instruction that receives an indication of the channel in which MoCA signals are operating; and
when a band of operation of an intermediate frequency conflicts with the channel in which the MoCA signals are operating, a second instruction that shifts the band of operation for an intermediate filter of the tuner out of the frequency band occupied by the channel in which the MoCA signals are operating.

Advantageously, the first instruction comprising receiving an indication that the channel in which the MoCA signals are operating is between about 1178 MHz and about 1222 MHz.

Advantageously, the first instruction comprising receiving an indication that the channel in which the MoCA signals are operating is between about 1228 MHz and about 1272 MHz.

Advantageously, the medium further comprises, when a band of operation for an intermediate filter conflicts with the channel in which the MoCA signals are operating, a third instruction that adjusts the operation of an oscillator in the intermediate filter in order to shift the band of operation of the intermediate filter.

Advantageously, the medium further comprises a third instruction that uses a common master processor to coordinate the operation of a MoCA transceiver and the intermediate filter of the tuner.

According to an aspect, a double conversion tuner is provided comprising a microprocessor configured to:
store an indication of the channel in which MoCA signals in a house are operating;
determine whether the intermediate frequency of the tuner is in the frequency band occupied by the channel in which the MoCA signals are operating; and
if the intermediate frequency of the tuner is in the frequency band occupied by the channel in which the MoCA signals are operating, shift the intermediate frequency of the tuner to a frequency band that is outside the channel in which the MoCA signals are operating.

According to a further aspect, an electrical circuit comprises:
a low noise amplifier that receives a radio frequency signal and that provides an output signal;
a filter that filters the output signal to eliminate MoCA interference in a frequency band at least between about 1210 MHz and about 1230 MHz in order to provide a filtered signal; and
a double conversion cable television tuner that receives the filtered signal from the filter.

Advantageously, the low noise amplifier and the tuner are integrated on two separated integrated circuits.

Advantageously, the filter is a low pass filter.

Advantageously, the filter is a bandstop filter.

Advantageously, the filter is a bandpass filter.

According to a further aspect, an electrical circuit comprises:
a low noise amplifier that receives a radio frequency signal and that provides an output signal;
a filter that filters the output signal to eliminate MoCA interference in a frequency band at least between about 1178 MHz and about 1272 MHz in order to provide a filtered signal; and
a double conversion cable television tuner that receives the filtered signal from the filter.

Advantageously, the low noise amplifier and the tuner are integrated on two separated integrated circuits.

Advantageously, the e filter is a low pass filter that attenuates signals including frequencies below 1272 MHz.
Advantageously, the filter is a bandstop filter.

### BRIEF DESCRIPTION OF THE DRAWINGS

The objects and advantages of the invention will be apparent upon consideration of the following detailed description, taken in conjunction with the accompanying drawings, in which like reference characters refer to like parts throughout, and in which:

FIG. 1 is a schematic diagram of an exemplary CMOS double conversion CATV tuner;

FIG. 2 is a schematic diagram of MoCA frequency band allocations;

FIG. 3 shows two adjacent MoCA bands, D2 and D3 together with two possible intermediate frequency bands according to the invention;

FIG. 4 is a schematic diagram of an exemplary CMOS double conversion CATV tuner according to the invention; and

FIG. 5 is a schematic diagram of an illustrative single or multi-chip module of this invention in a data processing system.

### DETAILED DESCRIPTION OF THE INVENTION

In the following description of the various embodiments, reference is made to the accompanying drawings, which form a part hereof, and in which is shown by way of illustration various embodiments in which the invention may be practiced. It is to be understood that other embodiments may be utilized and structural and functional modifications may be made without departing from the scope and spirit of the present invention.

As will be appreciated by one of skill in the art upon reading the following disclosure, various aspects described herein may be embodied as a method, a data processing system, or a computer program product. Accordingly, those aspects may take the form of an entirely hardware embodiment, an entirely software embodiment or an embodiment combining software and hardware aspects. Furthermore, such aspects may take the form of a computer program product stored by one or more computer-readable storage media having computer-readable program code, or instructions, embodied in or on the storage media. Any suitable computer readable storage media may be utilized, including hard disks, CD-ROMs, optical storage devices, magnetic storage devices, and/or any combination thereof.

In addition, various signals representing data or events as described herein may be transferred between a source and a destination in the form of electromagnetic waves traveling through signal-conducting media such as metal wires, optical fibers, and/or wireless transmission media (e.g., air and/or space).

The MoCA network within a home may operate at one or more channels, which are defined in standards documents.

Existing MoCA networks will typically only use one channel per home. This single channel frequency band used by MoCA networks may conflict in the first IF band used by most double conversion CATV tuners (near 1220MHz). The possible conflicting channels -- i.e., the channels that fall within the passband of the intermediate frequency of the CATV tuner -- are designated D2 and D3 in the MoCA specifications. The D2 channel has significant power from 1178MHz to 1222MHz. The D3 channel has significant power from 1228MHz to 1272 MHz. It should be noted that the values set forth herein are merely exemplary and do not necessarily limit the invention to any one particular set of values or any one specific set of MoCA channels. Rather, systems and methods according to the invention may preferably be implemented with any suitable set of tuner frequencies -- i.e., other than 1220MHz -- and any suitable set of MoCA channels -- i.e., other than channels D2 and D3.

In one embodiment of this invention, the double conversion CATV tuner supports an agile first IF frequency. This may be accomplished by changing a local oscillator frequency (which may dictate the intermediate frequency of the tuner) as necessary.

In certain embodiments of this invention, the CATV tuner may be instructed to change its first IF frequency to avoid the MoCA channel in use. The MoCA transceiver and the CATV tuner can be under control of a common master processor that can coordinate this action.

In this way, the MoCA interference is prevented from overlapping with the frequency-translated CATV first IF signal, and there is negligible, if any, SNR degradation.

An additional measure may be taken to prevent MoCA interference with the CATV tuner. If the CATV tuner is normally used with an external low-noise amplifier ("LNA") or active splitter, an additional filter can be inserted after the LNA or splitter and before the tuner. In this way, the additional filtering can be obtained with a smaller increase in system noise figure ("NF") than if the additional filtering were added before the LNA. This additional filtering does not protect the LNA from interference, but will protect the first mixer of the CATV tuner and will reduce the interference leakage into the CATV tuner first IF stage.

This invention can provide at least two distinct methods (which can be used in tandem in certain embodiments) to avoid degradation of tuner performance by strong out-of-band interfering signals, such as those from a MoCA home network.

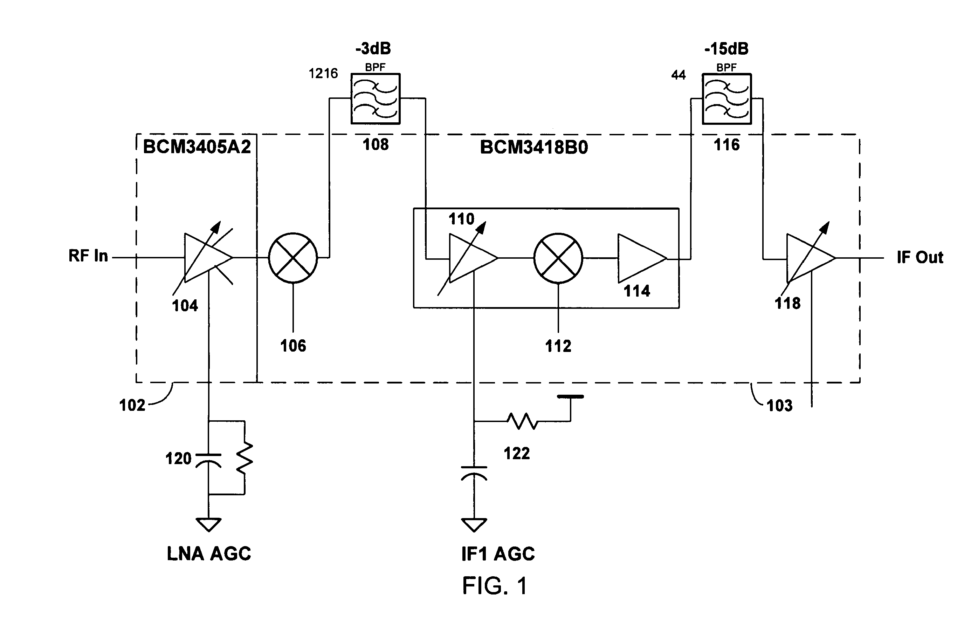

FIG. 1 is a schematic diagram of a BCM3418 tuner 103 manufactured by Broadcom Corporation of Irvine, California. Tuner 103 is an exemplary CMOS double conversion CATV tuner. Also shown in FIG. 1 is BCM 3405A2 low noise amplifier 101. Amplifier 101 is typically not integrated into the same chip as tuner 103 but could be integrated into the same chip. The nominal RF input signal range is 50 to 1000MHz. RC Circuit 120, or another suitable circuit, is typically used in conjunction with amplifier 101.

Mixer 106 typically up converts the frequency of the signal received from low noise amplifier 101 and, using a variable frequency local oscillator signal ranging from 1266MHz to 2216MHz, adds 1216 MHz to the RF input signal such that the first IF signal range is approximately 1220 MHz. Mixer 106 typically receives an input signal and mixes the input signal with a signal received from an oscillator (not shown) and then outputs a signal that multiplies the two input signals. The desired output of the mixer 106 is the difference frequency mixing product between the local oscillator signal and the RF signal. Thereafter, bandpass filter 108 typically filters the signal range to 1220 +/- 10 MHz. Amplifier 110, together with down converting mixer 112 and buffer 114, processes the signal to center the signal around 44 MHz. Thereafter, band pass filter 116 reduces the frequency to +/- 3 MHz about the 44 MHz center frequency. Thereafter the signal is amplified at amplifier 118 and transmitted out of the tuner.

The MoCA signal band can be anywhere from 800-1600 MHz. This range is divided into many sub-bands. The maximum transmit power at the F connector (the F connector is an industry-standard coaxial cable connector, widely used in consumer multimedia products) for a MoCA transceiver is +8 dBm, although 0 dBm is more typical. The signal bandwidth is about 44 MHz. Adjacent sub-bands are typically centered 50MHz apart. This allows a 6 MHz guardband between sub-bands, to prevent interference. Typically, in one home installation, only one or a few bands are used. MoCA implementations generally do not use two adjacent bands in one home because of potential interference issues.

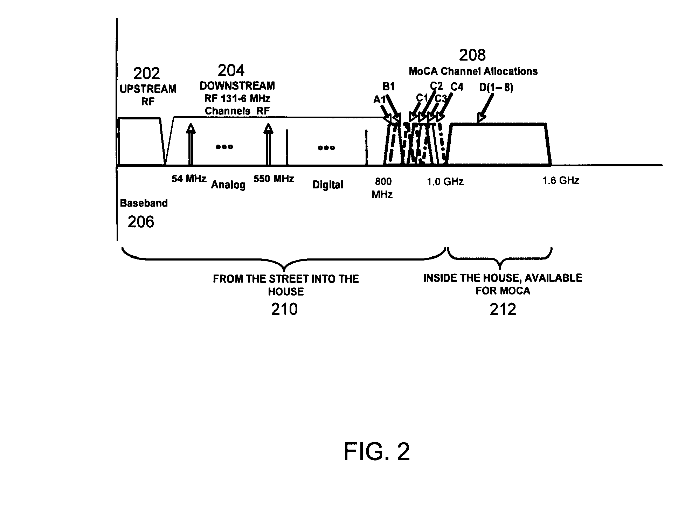

The MoCA band allocations are shown in FIG. 2. FIG. 2 shows the baseband 206, the upstream RF signal range which typically extends to about 54 MHz, the downstream RF signal range which typically extends from about 54 MHz until about 800 MHz, the analog signal domain from about 54 MHz until about 550 MHz, the digital signal domain from about 550 MHz until about 880 MHz, various frequency bands A1, B1, C1, C2, C3, C4 and D1-D8, all of which that can be used for MoCA channel allocations (A1-C4 may be used for future digital TV allocations). Range 210 is typically set aside for signals that come from the street into the house. Range 212 is typically set aside for signals inside the house; those signals are available for MoCA.

The maximum MoCA signal power in 6 MHz of bandwidth (one U.S TV channel) is 8 dBm - 10log(50/6) = -1 dBm. This is further reduced by the MoCA triplexer, which will typically have 40 dB of rejection at this frequency. The relative gain of the MoCA signal in the BCM 3418 tuner first IF band, compared to a desired RF signal, is typically -35dB. So the overall MoCA interference is equivalent to -76 dBm/6 MHz. An additional 25 dB of rejection is necessary to ensure that the MoCA signal does not degrade the QAM (Quadrature Amplitude Modulation) SNR (Signal to Noise Ratio) significantly.

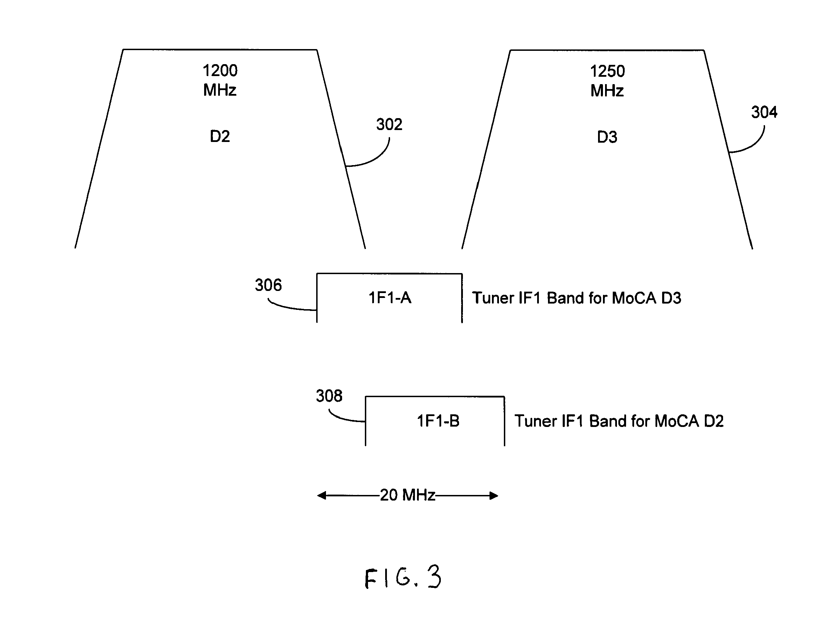

Current MoCA implementations do not use two adjacent bands in one home, because of potential interference issues. The embodiment of the invention shown schematically in FIG. 3 opens up the possibility of the following solution to the problem of MoCA frequency interference in the CATV signals according to the invention.

FIG. 3 shows two adjacent MoCA bands, D2 and D3, in greater detail than shown in FIG. 2, together with two possible intermediate frequency bands. Channels D2 and D3 are the bands within the MoCA range that may possibly conflict with the CATV tuner. FIG. 3 includes MoCA bands 302 and 304 (alternatively referred to herein as D2 and D3.) Band 302 has significant power from 1178 MHz to 1222 MHz, preferably centers at about 1200 MHz, and is about 44 MHz wide; 22 MHz off the center frequency in either direction. Band 304 has significant power from 1228 MHz to 1272 MHz, preferably centers around 1250 MHz, and is also about 44 MHz wide; 22 MHz off the center frequency in either direction. Accordingly, there is a 6 MHz guardband between the two channels.

FIG. 3 further illustrates one embodiment of a solution according to the invention that mitigates interference between the MoCA signals and the tuner intermediate frequency signals. This solution comprises shifting the BCM3418 intermediate frequency into the unused MoCA band. This can be accomplished by shifting the first IF center frequency to 1225MHz (in between MoCA bands) and modifying the BCM3418 tuner code. The tuner code will need to be initialized to know which MoCA band is being used in the particular home, or other suitable establishment, in which the tuner is located.

At least in part because the tuner center frequency is at 1225 MHz, tuner frequency 306 (which can be moved to center slightly less than 1225 MHz) can be used when MoCA band 304 is being implemented in the home. Tuner frequency 308 illustrates a band of frequency that can be used when MoCA band 302 is being implemented in the home.

Accordingly the tuner frequency is "agile" - i.e., the tuner frequency can adapt to the specific MoCA band being implemented in the house and carry on without interference from the MoCA band. Moreover, since the main set-top-box chip controls both the CATV RF tuner channel selection and the MoCA channel band selection, this common point of control can determine when an interference condition may exist, and offset the tuner first IF frequency as needed. As described above, in one embodiment of the invention, the shifting of the tuner frequency may be obtained by changing the second local oscillator frequency as necessary. Such an exemplary oscillator may be used to transmit signals to mixer 106. Use of such techniques for other MoCA frequency bands, as well as for signals other than the intermediate frequency of a CATV tuner, are within the scope of this invention.

An alternative embodiment of the invention is to add a lowpass or bandstop filter between the low noise amplifier 101 and the tuner 103. The passband loss of this filter is less critical than the front-end filter, since there is 15 dB of gain in the 3405 amplifier 101. Accordingly an additional filter, that may be implemented off of the tuner 103 chip (because the amplifier 101 and tuner 103 are not necessarily integrated on the same chip), may be used to attenuate MoCA signals.

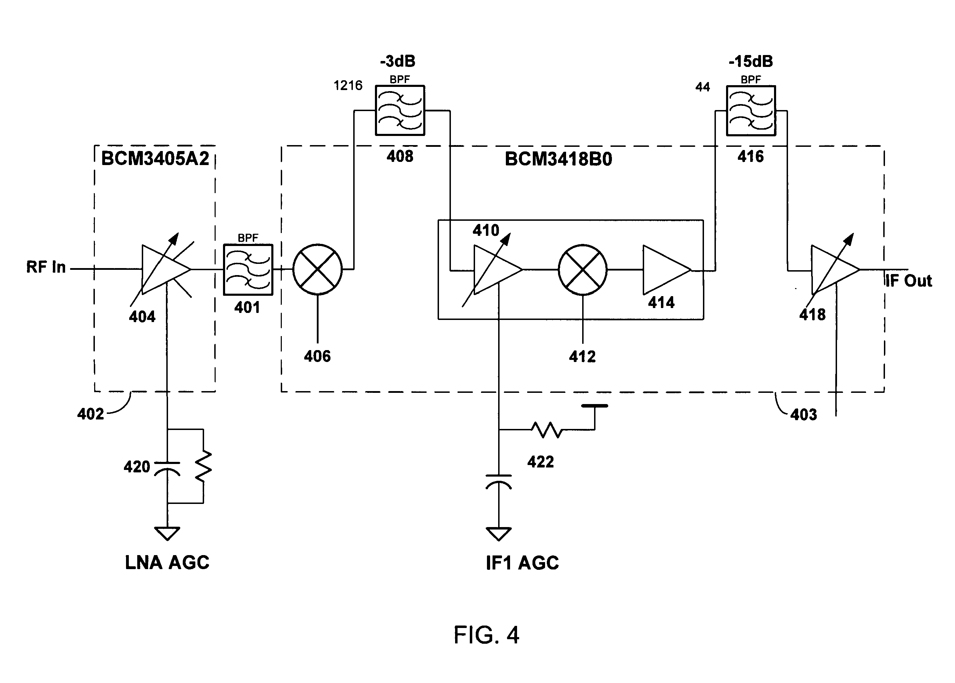

FIG. 4 is a schematic diagram of an exemplary CMOS double conversion CATV tuner according to the invention. All the components of the circuit in FIG. 4 are identical to the legacy tuner shown in FIG. 1 (accordingly, descriptions of the individual components have been omitted with respect to FIG. 4) with the exception of additional filter 401 which can integrated either on the same chip with LNA 402 or integrated on the same chip as tuner 403. Alternatively, additional filter 401 could be separate from both and disposed between both circuits.

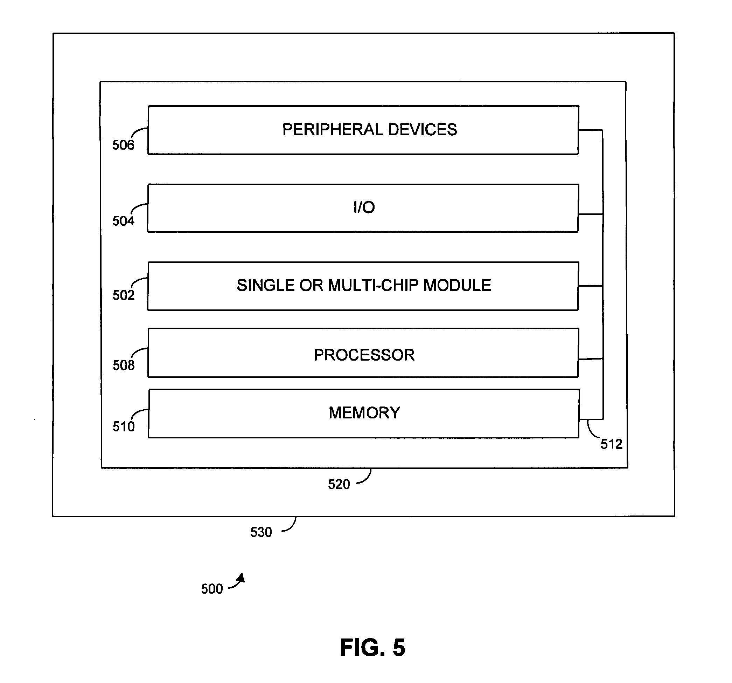

FIG. 5 shows a single or multi-chip module 502 according to the invention, which can be one or more integrated circuits, in an illustrative data processing system 500 according to the invention. Data processing system 500 may include one or more of the following components: I/O circuitry 504, peripheral devices 506, a processor 508 and memory 510. These components are coupled together by a system bus or other interconnections 512 and are populated on a circuit board 520 which is contained in an end-user system 530. System 500 may be configured for use in a cable television tuner according to the invention. It should be noted that system 500 is only exemplary, and that the true scope and spirit of the invention should be indicated by the following claims.

Thus, systems and methods for providing a MoCA compatibility strategy that allow MoCA signals to be used concurrently with CATV signals have been described.

Aspects of the invention have been described in terms of illustrative embodiments thereof. A person having ordinary skill in the art will appreciate that numerous additional embodiments, modifications, and variations may exist that remain within the scope and spirit of the appended claims. For example, one of ordinary skill in the art will appreciate that the steps illustrated in the figures may be performed in other than the recited order and that one or more steps illustrated may be optional. The methods and systems of the above-referenced embodiments may also include other additional elements, steps, computer-executable instructions, or computer-readable data structures. In this regard, other embodiments are disclosed herein as well that can be partially or wholly implemented on a computer-readable medium, for example, by storing computer-executable instructions or modules or by utilizing computer-readable data structures.

## Claims

1. One or more computer-readable media storing computer-executable instructions which, when executed by a processor on a computer system, perform a method for reducing interference from Multimedia over Coax Alliance (MoCA) signals in a cable television double conversion tuner, the method comprising:
receiving an indication of the channel in which MoCA signals are operating; and
shifting an intermediate frequency of the tuner out of the frequency band occupied by the channel in which the MoCA signals are operating.

2. The method of claim 1 further comprising receiving an indication that the channel in which the MoCA signals are operating is between about 1178 MHz and about 1222 MHz.

3. The method of claim 1 further comprising receiving an indication that the channel in which the MoCA signals are operating is between about 1228 MHz and about 1272 MHz.

4. A computer-readable medium storing computer-executable instructions for operating a cable television double conversion tuner, the instructions comprising:
a first instruction that receives an indication of the channel in which MoCA signals are operating; and
when a band of operation of an intermediate frequency conflicts with the channel in which the MoCA signals are operating, a second instruction that shifts the band of operation for an intermediate filter of the tuner out of the frequency band occupied by the channel in which the MoCA signals are operating.

5. A double conversion tuner comprising a microprocessor configured to:
store an indication of the channel in which MoCA signals in a house are operating;
determine whether the intermediate frequency of the tuner is in the frequency band occupied by the channel in which the MoCA signals are operating; and
if the intermediate frequency of the tuner is in the frequency band occupied by the channel in which the MoCA signals are operating, shift the intermediate frequency of the tuner to a frequency band that is outside the channel in which the MoCA signals are operating.

6. An electrical circuit comprising:
a low noise amplifier that receives a radio frequency signal and that provides an output signal;
a filter that filters the output signal to eliminate MoCA interference in a frequency band at least between about 1210 MHz and about 1230 MHz in order to provide a filtered signal; and
a double conversion cable television tuner that receives the filtered signal from the filter.

7. The electrical circuit of claim 6 wherein the low noise amplifier and the tuner are integrated on two separated integrated circuits.

8. The electrical circuit of claim 6 wherein the filter is a low pass filter.

9. The electrical circuit of claim 6 wherein the filter is a band pass filter.

10. An electrical circuit comprising:
a low noise amplifier that receives a radio frequency signal and that provides an output signal;
a filter that filters the output signal to eliminate MoCA interference in a frequency band at least between about 1178 MHz and about 1272 MHz in order to provide a filtered signal; and
a double conversion cable television tuner that receives the filtered signal from the filter.
